# FASCICULE DE BREVET EUROPEEN

(11) **EP 1 165 621 B1**
(45) Date de publication et mention de la délivrance du brevet: **02.10.2002**
(21) Numéro de dépôt: 00905143.4
(22) Date de dépôt: 15.02.2000
(51) Int. Cl.: C08B 37/18, C08G 63/668

(54) **POLYMERES DE CYCLODEXTRINE(S) ET/OU DERIVES DE CYCLODEXTRINE(S) PRESENTANT DES PROPRIETES COMPLEXANTES ET ECHANGEUSES D'IONS ET LEUR PROCEDE DE FABRICATION**
POLYMERISATE VON CYCLODEXTRIN(EN) UND/ODER CYCLODEXTRINDERIVAT(EN) MIT KOMPLEXIERUNGS-UND IONENAUSTAUSCHEIGENSCHAFTEN UND VERFAHREN ZUR DEREN HERSTELLUNG
CYCLODEXTRIN POLYMERS AND/OR CYCLODEXTRIN DERIVATIVES WITH COMPLEXING PROPERTIES AND ION-EXCHANGE PROPERTIES AND METHOD FOR THE PRODUCTION THEREOF

(30) Priorité: 15.02.1999 FR 9901968
(43) Date de publication de la demande: 02.01.2002
(73) Titulaire: UNIVERSITE DES SCIENCES ET TECHNOLOGIES DE LILLE, 59655 Lille (FR)
(72) Inventeur: WELTROWSKI, Marek, Quebec J4X 1J2 (CA); MORCELLET, Michel, F-59650 Villeneuve d'Ascq (FR); MARTEL, Bernard, F-59000 Lille (FR)
(74) Mandataire: Hennion, Jean-Claude
(86) Numéro de dépôt international: FR0000377
(87) Numéro de publication internationale: WO00047630

(56) Documents cités:
- EP-A- 0 502 194

## Description

La présente invention concerne un procédé de fabrication de copolymères solubles et insolubles de cyclodextrine(s) et/ou de dérivé(s) de cyclodextrine(s) et d'acide(s) poly(carboxylique(s)) ainsi que des copolymères solubles de cyclodextrine(s) et/ou de dérivé(s) de cyclodextrine(s) et d'acide(s) poly(carboxylique(s)).

Les cyclodextrines sont des oligomères cycliques composés de 6, 7 ou 8 unités de glucose que l'on nomme respectivement α, β et γ cyclodextrine. La structure de la molécule de cyclodextrine peut être assimilée à un cône tronqué dont la partie extérieure a des propriétés hydrophiles, tandis que l'intérieur forme une cavité hydrophobe propice à la formation réversible de complexes d'inclusion avec certaines molécules de nature hydrophobe. Grâce à cette structure moléculaire les cyclodextrines sont connues depuis longtemps en tant que molécules capables de piéger de façon réversible certains substrats de nature hydrophobe, notamment les molécules aliphatiques ou aromatiques, à partir de leurs solutions, vapeurs ou mélanges solides. Les complexes cyclodextrine-substrat sont connus sous le nom de supramolécules ou encore de complexes d'inclusion.

Un inconvénient majeur des cyclodextrines, sous leur forme brute, est leur relative petite taille qui les rend difficiles à extraire des solutions, notamment par les procédés membranaires classiques. De plus, leurs propriétés complexantes et relargantes peuvent être limitées par leur faible solubilité, notamment dans le cas de la β-cyclodextrine.

En revanche, les polymères de cyclodextrines présentent plusieurs avantages. Leur taille beaucoup plus importante que celle des cyclodextrines leur permet d'être séparés plus facilement du milieu liquide dans lequel ils se trouvent. Un polymère de cyclodextrine insoluble peut, par exemple, être séparé par filtration et un polymère de cyclodextrine soluble peut être isolé, par exemple, par ultrafiltration ou par toute autre technique membranaire.

De par leur structure macromoléculaire, les polymères de cyclodextrine peuvent être considérés comme des matériaux.

L'autre avantage des polymères de cyclodextrines est que les constantes de stabilité des complexes polymère-substrat sont souvent plus importantes que celles des complexes cyclodextrine-substrat. Par conséquent, les composés hydrophobes et également les composés hydrophiles sont plus facilement complexés et moins facilement libérés par les polymères de cyclodextrines que par les cyclodextrines elles-mêmes. Cette propriété est particulièrement importante pour les composés hydrophiles qui ne sont pas ou peu complexés par les cyclodextrines sous leur forme brute.

Les polymères de cyclodextrines connus peuvent être, selon leur structure, solubles ou insolubles dans l'eau.

Les polymères insolubles de cyclodextrine sont utilisés, par exemple, comme matériaux pour la séparation dans les différentes techniques chromatographiques, matériaux absorbants de matières indésirables ou à haute valeur ajoutée ou en tant que réservoir de substances actives, par exemple de médicaments, pesticides, insecticides ou autres, en vue de leur libération contrôlée.

Les polymères solubles de cyclodextrine ont eux aussi un large éventail d'applications. Entre autres, ils ont un bon pouvoir catalytique dans les réactions d'estérolyse et peuvent permettre la libération contrôlée d'une substance au travers d'une membrane ou encore de séparer des composés organiques dans des systèmes biphasiques.

Il existe trois types de polymères de cyclodextrine.

Dans le premier type de polymère, la cyclodextrine n'est pas liée par une liaison covalente au polymère. C'est le cas lorsque la cyclodextrine complexe la chaîne macromoléculaire d'un polymère pour former un complexe assimilable à un collier appelé polyrotaxane, lorsque la cyclodextrine forme un complexe d'inclusion avec les groupes hydrophobes latéraux d'un polymère (polyrotaxane latéral), ou lorsque la cyclodextrine est incorporée physiquement par simple mélange à un polymère.

Dans les deux types de polymères suivants, la cyclodextrine est liée par une liaison covalente au polymère, soit dans le squelette du polymère, soit en tant que substituant de la chaîne du polymère. La solubilité du polymère dépend, dans les deux cas, à la fois de la masse molaire du polymère et du degré de réticulation de celui-ci.

Les méthodes de synthèse des polymères de cyclodextrines dont la cyclodextrine constitue elle-même le squelette conduisent souvent à la production simultanée de polymères solubles et de polymères insolubles ; le rapport masse de polymère soluble/masse de polymère insoluble étant modulable en fonction des paramètres de la réaction.

Ces méthodes sont basées sur l'utilisation de différents agents bifonctionnels tels que l'épichlorhydrine, les dialdéhydes, les diacides, les diesters, les dichlorures de diacide, les diépoxydes, les diisocyanates ou les dérivés dihalogénés, les polyisocyanates, l'éthylène glycol bis(époxypropyl) éther, les dihalogénures de diacides carboxyliques dans un solvant organique, l'acide phytique.

Un procédé de fabrication de copolymères de cyclodextrine(s) utilisant l'épichlorhydrine a été notamment proposé par la société Nestlé (NETH 6505361) et par Solms et Egli (Helv. Chim. Acta 48, 1225 (1965) ; US 3420788). De même, plusieurs modifications de la méthode de réticulation par l'épichlorhydrine ont été plus tard proposées dans les documents BP 1244990, Wiedenhof N. et al., Die Starke 21(5), 119-123 (1969), Hoffman J.L., J. Macromol. Sci-Chem., A7(5), 1147-1157 (1973), JP 58171404 et JP 61283601.

Un procédé utilisant un dialdéhyde, un diacide, un diester, un dichlorure de diacide, un diépoxyde, un diisocyanate ou un dérivé dihalogéné a été décrit dans le document US 3472835. Cette méthode prévoit l'activation des cyclodextrines par action de sodium métallique dans l'ammoniaque liquide puis la réaction avec l'agent bifonctionnel de réticulation.

Un procédé utilisant les polyisocyanates dans les solvants organiques aprotiques a été divulgué dans les documents US 4917956, Asanuma H., et al. Chem. Commun., 1971-1972 (1997) et WO 9822197.

Un procédé utilisant l'éthylène glycol bis(époxypropyl) éther a été décrit par Fenyvesi E., et al. dans le document Ann.Univ. Sci. Budapest, Rolando Eotvos Nominatae, Sect. Chim. 15, 13-22 (1979). Un procédé utilisant d'autres composés diépoxy a également été décrit par Sugiura I., et al. dans le document Bull. Chem. Soc. Jpn., (62, 1643-1651 (1989)).

Un procédé utilisant les dihalogénures de diacides carboxyliques dans un solvant organique a été développé dans les documents US 4958015 et US 4902788.

Un procédé à base d'acide phytique qui est un acide polyphosphorique utilisé pour réticuler la cyclodextrine par un traitement thermique sous vide a été décrit dans le document US 5734031.

Yoshinaga a proposé, dans le document EP 502 194, la synthèse de polymères de cyclodextrines de natures variables telles que polyurethane, polyurée, polyester insaturés, ployesters, polycarbonates, polyamides et polysulfones. Ces polymères sont obtenus par une méthode particulière qui privilégie l'obtention de polymères linéaires, puisque seulement deux des fonctions alcool réagissent avec les comonomères. Ces polymères qui ne comportent pas de fonctions acide carboxylique, sont destinés à former des membranes dégradables aux propriétés complexantes.

Le second type de polymères, où la cyclodextrine est un groupe pendant d'une chaîne polymère, est produit par greffage de cyclodextrine(s) ou de dérivés de cyclodextrine(s) sur une chaîne polymère préexistante. Ainsi, des dérivés halotriazines et halopyrimidines des cyclodextrines ont été synthétisés. Le greffage des cyclodextrines a été réalisé par la réaction de ces dérivés sur des substances cellulosiques telles que décrites dans le document DE 19520989. D'autre part, des cyclodextrines ont également été fonctionnalisées avec des groupements aldéhydes puis greffées sur le chitosane par réaction d'amination réductive ; une telle réaction est notamment décrite par Tomoya T., et al., dans J.Polym. Sci, Part A : Polym. Chem., 36(11), 1965-1968 (1998).

Ces polymères à base de cyclodextrine peuvent également être synthétisés par fonctionnalisation de celle-ci par des groupes fonctionnels polymérisables tels que acryloyle ou méthacryloyle. Cette fonctionnalisation est suivie d'une polymérisation ou copolymérisation de ces dérivés. De tels procédés ont été décrits dans les documents DE 4009825, par Wimmer T., et al. dans Minutes Int. Symp. Cyclodextrins 6^{th} 106-109, (1992) Ed. Hedges A.L. Ed. Sante Paris, par Harada A., et al., dans Macromolecules 9(5), 701-704, (1976) et par Janus L. , et al., dans Reactive and Functional Polymers (sous presse).

Enfin, un procédé utilisant les acrylates, l'acide acrylique et le styrène avec insolubilisation de la cyclodextrine réalisée par une polymérisation en émulsion a été décrit dans le document EP 780401.

Les procédés de réticulation des cyclodextrines avec l'épichlorhydrine ont pour principal inconvénient les propriétés corrosives et toxiques de ce réactif. De même, les procédés basés sur l'utilisation de composés diépoxy se révèlent toxiques et d'un coût de revient élevé. Les réticulations avec les polyisocyanates et les dihalogénures de diacides nécessitent l'utilisation de solvants organiques nuisibles pour l'environnement et ne peuvent donc pas être utilisées à grande échelle. L'approche consistant à transformer les cyclodextrines en dérivés réactifs capables de réagir avec les polymères est également laborieuse et coûteuse.

A l'heure actuelle la seule méthode non polluante et utilisant des réactifs peu coûteux est celle décrite par Billy D.C. et al. dans le document Proc. Int. Symp. Controlled Release Bioact. Mater 24th, 545-546 (1997). Selon cette méthode, on obtient en mélangeant, dans de l'huile d'olive, de l'acide poly(acrylique) avec de la cyclodextrine, des microsphères de polymère insoluble de cyclodextrine complexée avec l'acide oléique provenant de l'huile d'olive. Néanmoins, il n'est pas possible, selon cette méthode d'obtenir le polymère insoluble seul, c'est-à-dire non complexé par l'acide oléique. De plus, le temps de réaction conséquent (3 heures) et la mise en oeuvre de ce procédé compromettent d'un point de vue économique, son utilisation à l'échelle industrielle.

La présente invention propose un procédé de fabrication de polymères à base de cyclodextrine(s) non polluant, peu coûteux et qui est susceptible d'être mis en oeuvre à l'échelle industrielle.

Le procédé de fabrication de polymères solubles et insolubles à base de cyclodextrine(s) et/ou de dérivé(s) de cyclodextrine(s) et/ou de complexe(s) d'inclusion de cyclodextrine(s) et/ou de dérivé(s) de cyclodextrine(s) de l'invention se caractérise par les opérations suivantes :
- la préparation à l'état solide d'un mélange de cyclodextrine(s) et/ou de dérivé(s) de cyclodextrine(s) et/ou de complexe(s) d'inclusion de cyclodextrine(s) et/ou de dérivé de cyclodextrine(s) et d'un acide poly(carboxylique) et/ou d'un anhydride d'acide polycarboxylique ou d'un mélange d'acides poly(carboxylique(s)) et/ou d'anhydride(s) d'acide(s) poly(carboxylique(s)) et, éventuellement, d'un catalyseur ;
- le chauffage du mélange solide, à une température comprise entre 100°C et 200°C, pendant une durée comprise entre 1 min et 60 min, de préférence, égale à 30 min.

Le procédé de la présente invention peut en effet avantageusement s'appliquer à un complexe d'inclusion de cyclodextrine(s) ou de dérivés de cyclodextrine (agent actif complexé par la cyclodextrine ou le dérivé de cyclodextrine). Un polymère obtenu à partir d'un complexe d'inclusion offre une meilleure garantie des propriétés complexantes de la cyclodextrine; la présence de l'agent complexé préservant l'accessibilité de la cavité de cette dernière.

Le chauffage a pour but de réaliser une condensation des groupes hydroxyles de la cyclodextrine ou des dérivés de la cyclodextrine avec les fonctions acide carboxylique de l'acide poly(carboxylique). Une liaison covalente de type ester est ainsi formée entre une molécule de cyclodextrine ou de dérivé de cyclodextrine et une molécule d'acide poly(carboxylique). Lorsque uniquement deux groupements hydroxyles de chaque molécule de cyclodextrine réagissent avec deux molécules distinctes d'acide poly(carboxylique), un copolymère linéaire est formé. En revanche, lorsque trois ou plusieurs groupes hydroxyles de cyclodextrine forment des liaisons ester avec trois ou plusieurs molécules d'acide poly(carboxylique) distinctes, un copolymère ramifié et/ou réticulé est formé. Dans le cas où l'enchaînement de molécules de cyclodextrine(s) et/ou de dérivés de cyclodextrine(s) est plutôt linéaire ou faiblement ramifié et de faible masse molaire, le copolymère formé par cet enchaînement est soluble. Dans le cas où les chaînes forment surtout un réseau tridimensionnel de grande masse molaire, le copolymère obtenu est insoluble.

Le mécanisme réactionnel qui conduit à la copolymérisation de cyclodextrine(s) ou de dérivé(s) de cyclodextrine(s) et d'un ou d'un mélange d'acide(s) poly(carboxylique)(s) n'est pas encore élucidé. Cependant, ce mécanisme pourrait être semblable à celui qui a été présenté pour le traitement de réticulation de la cellulose avec les acides poly(carboxylique(s)) en présence d'un catalyseur proposé par Welsh C.M., dans le document American Dyestuff Reporter (83(9), 19-26 (1994)). Selon ce mécanisme, le chauffage permet, premièrement, de former un anhydride à partir de deux des fonctions acide carboxylique du polyacide ; cet anhydride réagit ensuite avec une fonction hydroxyle de la cyclodextrine pour former une liaison ester. Une autre fonction anhydride est formée par condensation de deux autres groupements carboxyles, qui réagit avec une fonction hydroxyle d'une autre molécule de cyclodextrine en formant une deuxième liaison ester. Le mécanisme pourrait être représenté par la séquence de réaction suivante :

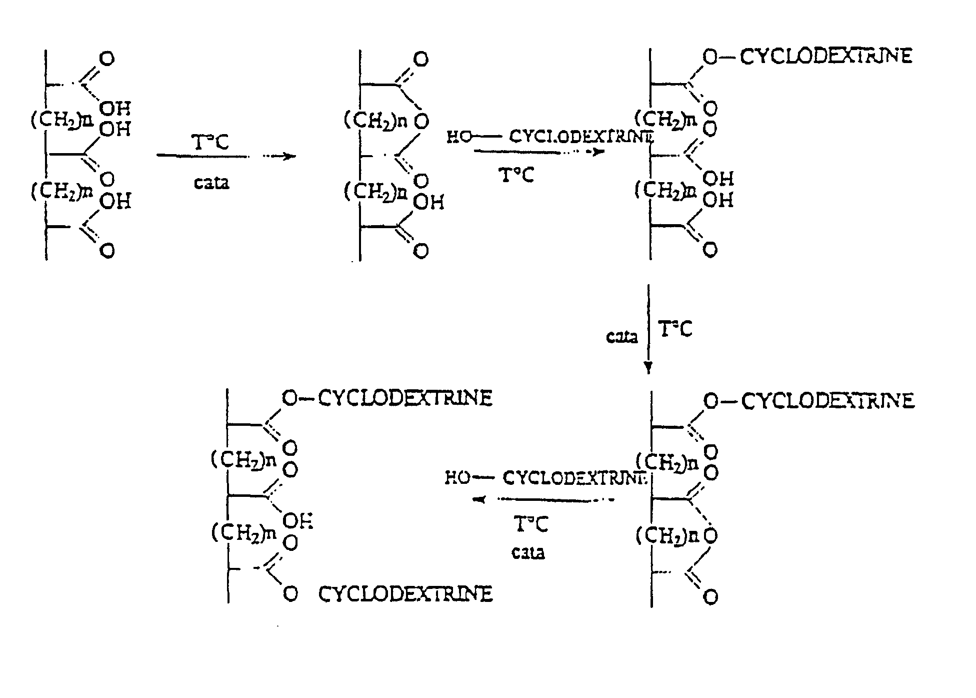

Il est possible selon le procédé de l'invention d'obtenir des polymères qui comportent dans leur squelette des molécules de cyclodextrine et/ou de dérivés de cyclodextrine ainsi que des polymères qui comportent en tant que substituants ou chaînes latérales des molécules de cyclodextrine(s) et/ou de dérivés de cyclodextrine.

Le procédé de la présente invention est mis en oeuvre, de préférence avec des acides poly(carboxylique(s)) présentant au moins trois fonctions acide carboxylique tels que par exemple, des acides poly(carboxylique(s)) qui comportent des fonctions acide carboxylique telles que sous l'effet du traitement thermique, ces derniers forment un anhydre cyclique intermédiaire à 5 ou 6 carbones.

Le mélange solide de cyclodextrine(s) ou de dérivé(s) de cyclodextrine(s) et/ou de complexe(s) d'inclusion de cyclodextrine et/ou de dérivé(s) de cyclodextrine et d'acide(s) poly(carboxylique(s)) peut être réalisé directement en mélangeant ces produits à l'état solide. Néanmoins, de préférence, on prépare au préalable une solution aqueuse de cyclodextrine(s) et/ou de dérivé(s) de cyclodextrine(s) et/ou de complexe(s) d'inclusion de cyclodextrine et/ou de dérivés de cyclodextrine et d'un acide poly(carboxylique) ou d'un anhydride d'acide poly(carboxylique) ou d'un mélange d'acides poly(carboxylique(s)) et/ou d'anhydride(s) d'acide(s) poly(carboxylique(s)) et, éventuellement, d'un catalyseur et ensuite, on évapore l'eau de cette solution à une température comprise entre 40°C et 100°C et, de préférence, sous vide à 90°C.

Selon une première variante du procédé de l'invention qui permet de produire un copolymère insoluble de cyclodextrine(s) ou de dérivés de cyclodextrine(s) et d'acide(s) poly(carboxylique(s)), le produit solide obtenu après chauffage est lavé abondamment à l'eau.

Selon les conditions de réaction, il est possible d'obtenir majoritairement soit un copolymère soluble soit un copolymère insoluble dans l'eau. En particulier, plus le temps de réaction est long et plus la température de chauffage est élevée, plus le copolymère formé présente des chaînes longues et/ou est ramifié ce qui le rend insoluble.

Aussi, selon cette première variante, pour obtenir majoritairement un copolymère insoluble, le mélange solide est chauffé à une température égale ou supérieure à 150°C, de préférence égale à 170°C, pendant une durée supérieure ou égale à 30 minutes et de préférence sous vide. Le terme "sous vide" fait référence, dans le cadre de la présente invention, à la pression qu'il est possible d'atteindre en utilisant une trompe à eau, c'est-à-dire une pression de l'ordre de 1,01 10⁴ Pa.

Lorsque le mélange est chauffé à une température égale à 180°C, sous vide, durant 30 minutes, on obtient un bon rendement en copolymères insolubles et une très faible quantité de copolymères solubles dans l'eau.

Selon une seconde variante destinée à produire de façon majoritaire un copolymère soluble, le produit solide obtenu après chauffage est lavé à l'eau puis filtré et le copolymère soluble est isolé du filtrat, de préférence, par dialyse puis lyophilisation.

Selon cette seconde variante, le mélange est chauffé à une température inférieure ou égale à 140°C, pendant une durée inférieure ou égale à 30 minutes et de préférence sous vide, en sorte de produire majoritairement un copolymère soluble.

Le rendement maximum en copolymères solubles est obtenu lorsque le mélange est chauffé sous vide, à une température égale à 140°C durant 30min.

Lorsque le mélange est chauffé à une température égale à 130°C, sous vide, pendant 30 minutes, on obtient une très faible quantité de copolymères insolubles.

Par ailleurs, dans les deux variantes, l'ajout d'un catalyseur au mélange cyclodextrine(s) ou dérivé(s) de cyclodextrine(s) ou de leurs complexes d'inclusion et d'acide(s) poly(carboxylique(s)) et/ou d'anhydride(s) d'acide(s) poly(carboxylique(s)) permet d'augmenter le rendement de la réaction.

Le catalyseur utilisé est de préférence choisi parmi les dihydrogénophosphates, les hydrogénophosphates, les phosphates, les hypophosphites, les phosphites de métaux alcalins, les sels de métaux alcalins des acides polyphosphoriques, les carbonates, les bicarbonates, les acétates, les borates, les hydroxydes de métaux alcalins, les amines aliphatiques et l'ammoniaque, et de préférence, parmi l'hydrogénophosphate de sodium, le dihydrogénophosphate de sodium et l'hypophosphite de sodium.

Le procédé de la présente invention s'applique, de préférence, aux cyclodextrine(s) choisies parmi l'α-cyclodextrine, la β-cyclodextrine et la γ-cyclodextrine et aux dérivés hydroxypropyl méthylés ou acétylés de l'α-cyclodextrine, de la β-cyclodextrine et de la γ-cyclodextrine et aux complexes d'inclusion formés à partir desdites cyclodextrines et desdits dérivés de cyclodextrine.

De même l'acide poly(carboxylique) et l'anhydride d'acide utilisés dans le procédé de l'invention, sont, de préférence, choisis parmi les acides poly(carboxylique(s)) et les anhydrides des acides poly(carboxyliques) suivants : les acides poly(carboxyliques) acycliques saturés et insaturés, les acides poly(carboxylique(s)) cycliques saturés et insaturés, les acides poly(carboxylique(s)) aromatiques, les acides hydroxypoly(carboxylique(s)), de préférence, parmi l'acide citrique, l'acide poly(acrylique), l'acide poly(méthacrylique), l'acide 1, 2, 3, 4-butanetétracarboxylique, l'acide maléique, l'acide citraconique, l'acide itaconique, l'acide 1, 2, 3-propane tricarboxylique, l'acide aconitique, l'acide all-cis-1, 2, 3, 4-cyclopentanetétracarboxylique, l'acide méllitique, l'acide oxydisuccinique, l'acide thiodisuccinique.

La présente invention concerne également des copolymères de cyclodextrine(s) et/ou de dérivés de cyclodextrine(s) et d'acide(s) poly(carboxylique(s)) dont la structure comporte de manière caractéristique la répétition d'un motif de formule générale : 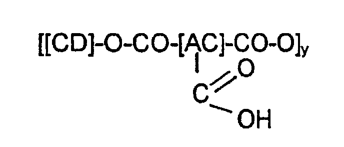 où y est le nombre de répétitions du motif et,
dans laquelle [CD] représente une molécule d'α-cyclodextrine, de β-cyclodextrine, de γ-cyclodextrine ou d'un dérivé d'α-cyclodextrine, de β-cyclodextrine ou de γ-cyclodextrine, de préférence, un dérivé hydroxypropyl méthylé ou acétylé de l'α-cyclodextrine, de la β-cyclodextrine ou de la γ-cyclodextrine ou d'un complexe d'inclusion desdites cyclodextrines ou desdits dérivés de cyclodextrine ; et 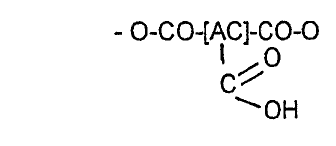 représente la chaîne moléculaire d'un acide (poly)carboxylique dont au moins deux fonctions acide carboxylique ont été estérifiées et qui supporte au moins une fonction acide carboxylique non estérifiée.

Ces copolymères peuvent notamment, mais non exclusivement, être obtenus par le procédé de la présente invention. Ils sont linéaires et/ou ramifiés et/ou réticulés et peuvent être solubles ou non.

Les copolymères insolubles et solubles de cyclodextrine(s) et/ou de dérivé(s) de cyclodextrine(s) obtenus par le procédé de l'invention ainsi que les copolymères solubles qui font également l'objet de la présente invention, trouvent leur intérêt dans des applications identiques à celles décrites précédemment.

Par ailleurs, les copolymères de cyclodextrine(s) solubles et insolubles obtenus selon le procédé de l'invention présentent un caractère ionique à cause de la présence de fonctions acide carboxylique résiduelles provenant des fonctions acide carboxylique qui n'ont pas été estérifiées. Ce type de copolymère possédant un caractère ionique est recherché pour différentes applications dans les procédés de séparation et d'immobilisation.

De plus, la présence simultanée dans la structure des copolymères insolubles obtenus par le procédé de l'invention et dans celle des copolymères solubles de la présente invention, de fonctions acide carboxylique (possibilité d'échange de cations) et de molécules de cyclodextrine(s) confère à ces copolymères des propriétés. uniques d'absorption d'eau et de compléxation de molécules odorantes. Ainsi ces copolymères pourront être utilisés pour la fabrication de produits sanitaires type couches pour bébés, couches d'incontinence, serviettes périodiques et autres.

Les exemples non limitatifs suivants sont donnés en vue de mieux illustrer le procédé de la présente invention ainsi que les copolymères solubles de la présente invention.

### Exemple 1

25 ml de solution aqueuse contenant 100g/l de β-cyclodextrine, 100 g/l d'acide citrique et 30g/l d'hydrogénophosphate de sodium ont été préparés. L'eau de cette solution a été évaporée sous vide à 90°C. Le résidu solide d'évaporation a été chauffé sous vide à 170°C pendant 30 minutes. Le produit solide de la réaction a été lavé successivement, avec trois volumes de 60 ml d'eau et avec deux volumes de 50ml de méthanol. La première fraction de 60ml d'eau de lavage a été conservée. Le résidu solide résultant du lavage a été ensuite séché à une température de 70°C et pesé. La masse de copolymère insoluble de cyclodextrine ainsi obtenu est de 3,8g. La première fraction de 60ml d'eau de lavage a été dialysée à l'aide d'une membrane de 12000-14000d pendant 60 heures contre l'eau distillée. La solution résultant de la dialyse a été lyophilisée ; le copolymère soluble de cyclodextrine ainsi obtenu avait une masse de 0,1 g.

### Exemple 2

Le procédé de la présente invention a été mis en oeuvre comme décrit dans l'exemple 1 ; la durée de chauffage est de 15 min. La masse de copolymère insoluble de cyclodextrine ainsi obtenu est de 2,3 g et la masse de copolymère soluble de cyclodextrine obtenu est de 0,4 g.

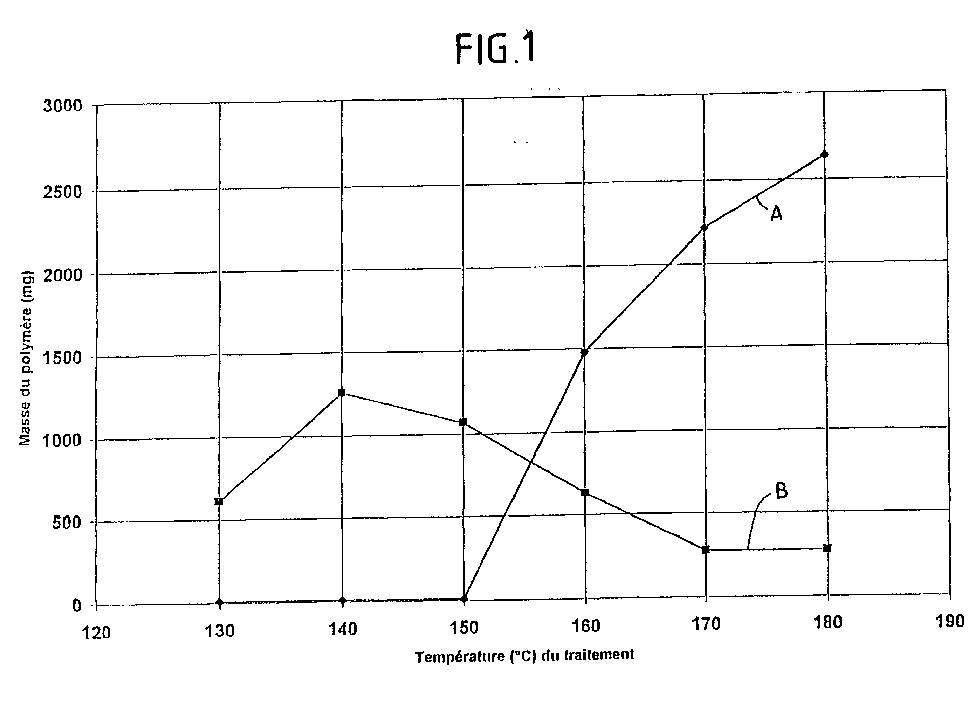

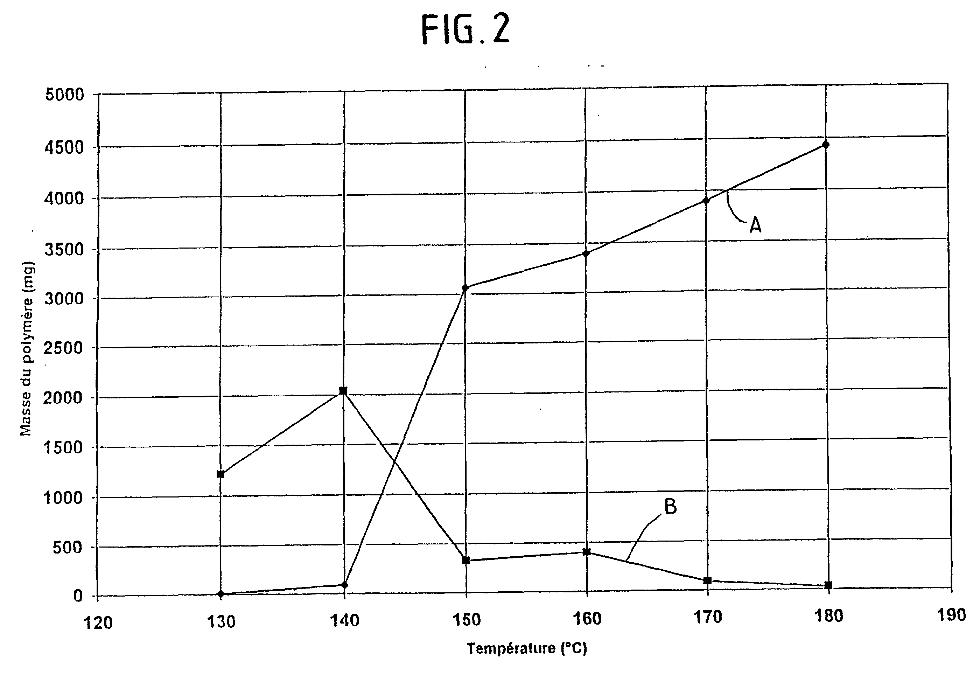

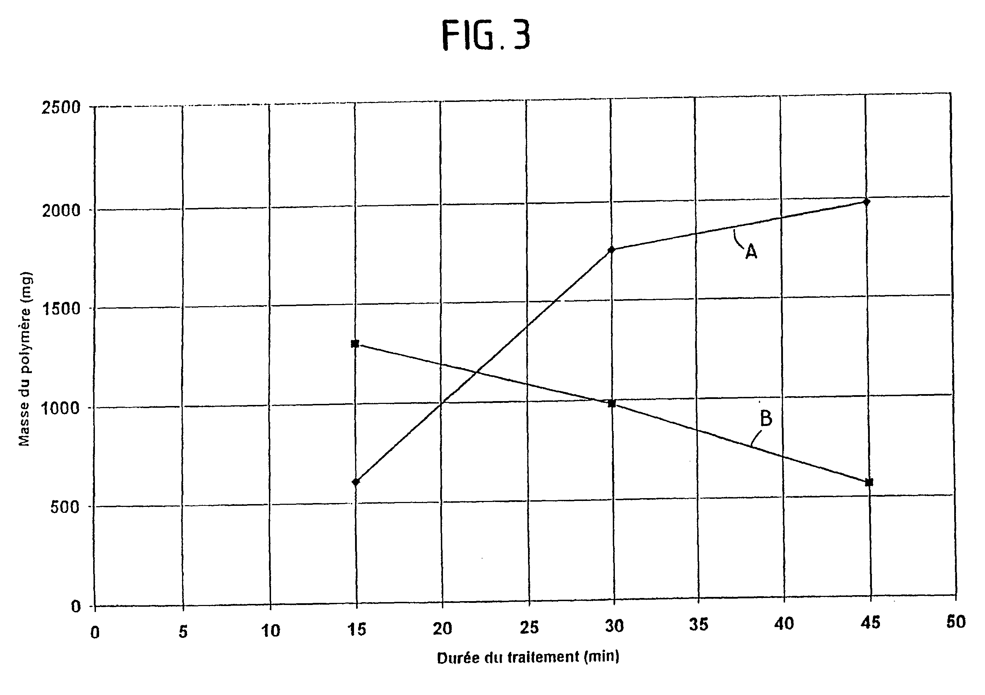

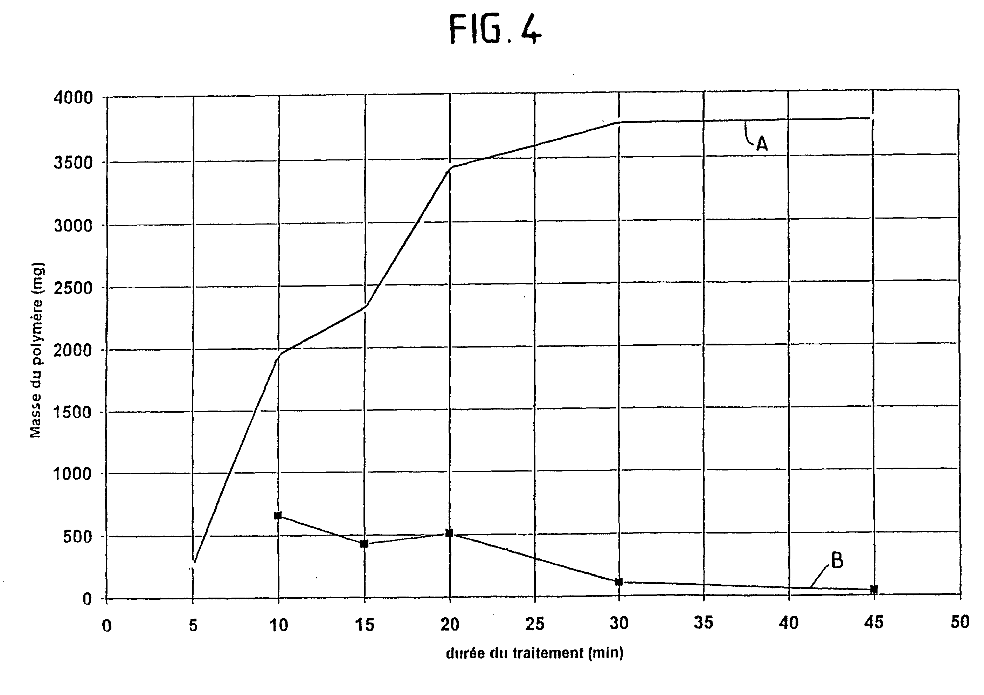

En référence aux exemples 1 et 2, les figures 1 à 4 représentent l'influence de différents paramètres sur la réaction de polymérisation de la β-cyclodextrine et de l'acide citrique.

La figure 1 représente l'influence de la température lorsque la réaction est conduite à pression atmosphérique, durant 30 min. La courbe A de la figure 1 représente la masse de copolymères insolubles obtenue ; la courbe B représente la masse de copolymères solubles obtenue.

La figure 2 représente l'influence de la température lorsque la réaction est conduite sous vide, durant 30 min. La courbe A de la figure 1 représente la masse de copolymères insolubles obtenue ; la courbe B représente la masse de copolymères solubles obtenue.

La figure 3 représente l'influence de la durée du traitement lorsque la réaction est conduite à pression atmosphérique, à 170°C. La courbe A de la figure 1 représente la masse de copolymères insolubles obtenue ; la courbe B représente la masse de copolymères solubles obtenue.

La figure 4 représente l'influence de la durée du traitement lorsque la réaction est conduite sous vide, à 170°C. La courbe A de la figure 1 représente la masse de copolymères insolubles obtenue; la courbe B représente la masse de copolymères solubles obtenue.

### Exemple 3

25ml de solution aqueuse contenant 100g/l de β-cyclodextrine, 100g/l d'acide citrique et 30g/l d'hydrogénophosphate de sodium ont été préparés. L'eau de cette solution a été évaporée sous vide à 90°C. Le résidu solide d'évaporation a été chauffé à la pression atmosphérique à 170°C pendant 15 minutes. Le produit solide de la réaction a été lavé successivement, avec trois volumes de 60 ml d'eau et avec deux volumes de 50ml de méthanol. La première fraction de 60 ml d'eau de lavage a été conservée. Le résidu solide résultant du lavage a été ensuite séché à une température de 70°C et pesé. La masse de copolymère insoluble de cyclodextrine obtenu est de 0,6 g. La première fraction de 60 ml d'eau de lavage a été dialysée à l'aide d'une membrane de 12000-14000d pendant 60 heures contre l'eau distillée. La solution résultant de la dialyse a été lyophilisée ; le copolymère soluble de cyclodextrine ainsi obtenu avait une masse de 1,3 g.

### Exemple 4

25 ml de solution aqueuse contenant 100g/l d' α-cyclodextrine, 100g/l d'acide citrique et 30g/l d'hydrogénophosphate de sodium ont été préparés. L'eau présente dans cette solution a été évaporée sous vide à 90°C. Le résidu solide d'évaporation a été chauffé sous vide à 170°C pendant 30 minutes. Le produit solide de la réaction a été lavé successivement, avec trois volumes de 60ml d'eau et avec deux volumes de 50ml de méthanol. La première fraction de 60ml d'eau de lavage a été conservée. Le résidu solide résultant du lavage a été ensuite séché à une température de 70°C et pesé. La masse de copolymère insoluble de cyclodextrine a été de 2,4g. La première fraction de 60ml d'eau de lavage a été dialysée avec une membrane de 12000-14000d pendant 60 heures contre l'eau distillée. La solution résultant de la dialyse a été lyophilisée ; le copolymère soluble de cyclodextrine ainsi obtenu avait une masse de 0,14 g.

### Exemple 5

25 ml de solution aqueuse contenant 100g/l de γ-cyclodextrine, 100 g/l d'acide citrique et 30g/l d'hydrogénophosphate de sodium ont été préparés. L'eau de cette solution a été évaporée sous vide à 90°C. Le résidu solide d'évaporation a été chauffé sous vide à 170°C pendant 30 minutes. Le produit solide de la réaction a été lavé successivement, avec trois volumes de 60 ml d'eau et avec deux volumes de 50 ml de méthanol. La première fraction de 60 ml d'eau de lavage a été conservée. Le résidu solide résultant du lavage a été ensuite séché à une température de 70°C et pesé. La masse de copolymère insoluble de cyclodextrine a été de 3,8 g. La première fraction de 60ml d'eau de lavage a été dialysée à l'aide d'une membrane de 12000-14000d pendant 60 heures contre l'eau distillée. La solution résultant de la dialyse a été lyophilisée ; le copolymère soluble de cyclodextrine ainsi obtenu avait une masse de 0,08 g.

### Exemple 6

25 ml de solution aqueuse contenant 100 g/l de β-cyclodextrine, 100g/l d'acide polyacrylique et 30 g/l d'hypophosphite de sodium ont été préparés. L'eau de cette solution a été évaporée sous vide à 90°C. Le résidu solide d'évaporation a été chauffé sous vide à 170°C pendant 30 minutes. Le produit solide de la réaction a été lavé successivement, avec trois volumes de 60 ml d'eau et avec deux volumes de 50 ml de méthanol. La première fraction de 60 ml d'eau de lavage a été conservée. Le résidu solide résultant du lavage a été ensuite séché à une température de 70°C et pesé. La masse de copolymère insoluble de cyclodextrine a été de 3,8 g. La première fraction de 60 ml d'eau de lavage a été dialysée à l'aide d'une membrane de 12000-14000d pendant 60 heures contre l'eau distillée. La solution résultant de la dialyse a été lyophilisée ; le copolymère soluble de cyclodextrine ainsi obtenu avait une masse de 0,03 g.

### Exemple 7

25 ml de solution aqueuse contenant 100 g/l de β-cyclodextrine, 100 g/l d'acide 1,2,3,4-butanetetracarboxylique et 30 g/l de dihydrogénophosphate de sodium ont été préparés. L'eau de cette solution a été évaporée sous vide à 90°C. Le résidu solide d'évaporation a été chauffé sous vide à 170°C pendant 10 minutes. Le produit solide de la réaction a été lavé successivement, avec trois volumes de 60 ml d'eau et avec deux volumes de 50 ml de méthanol. La première fraction de 60 ml d'eau du premier lavage a été conservée. Le résidu solide résultant du lavage a été ensuite séché à une température de 70°C et pesé. La masse de copolymère insoluble de cyclodextrine a été de 3,5g. La première fraction de 60 ml d'eau de lavage a été dialysée à l'aide d'une membrane de 12000-14000d pendant 60 heures contre l'eau distillée. La solution résultant de la dialyse a été lyophilisée ; le copolymère soluble de cyclodextrine ainsi obtenu avait une masse de 0,03 g.

### Exemple 8

25 ml de solution aqueuse contenant 100g/l de β-cyclodextrine, 100 g/l d'acide 1,2,3,4-butanetetracarboxylique et 30 g/l d'hypophosphite de sodium ont été préparés. L'eau de cette solution a été évaporée sous vide à 90°C. Le résidu solide d'évaporation a été chauffé sous vide à 170°C pendant 30 minutes. Le produit solide de la réaction a été lavé successivement, avec trois volumes de 60 ml d'eau et avec deux volumes de 50 ml de méthanol. La première fraction de 60 ml d'eau de lavage a été conservée. Le résidu solide résultant du lavage a été ensuite séché à une température de 70°C et pesé. La masse de copolymère insoluble de cyclodextrine ainsi obtenu est de 4,0 g. La première fraction de 60 ml d'eau de lavage a été dialysée à laide d'une membrane de 12000-14000d pendant 60 heures contre l'eau distillée. La solution résultant de la dialyse a été lyophilisée ; le copolymère soluble de cyclodextrine ainsi obtenu avait une masse de 0,004 g.

### Exemple 9

Le procédé a été réalisé selon la méthode décrite dans l'exemple 1 sans solubilisation préalable de l'acide citrique, de l'hydrogénophosphate de sodium et de la β-cyclodextrine dans l'eau et sans l'évaporation d'eau subséquente. Ces réactifs ont été mélangés à l'état solide et chauffés directement. La masse de copolymère insoluble de cyclodextrine ainsi obtenue est de 3,2 g et la masse de copolymère soluble de cyclodextrine est de 0,5 g.

### Exemple 10

Le procédé a été réalisé selon la méthode décrite dans l'exemple 1, sans présence d'hydrogénophosphate de sodium. La masse de copolymère insoluble de cyclodextrine ainsi obtenue est de 3,0 g et la masse du copolymère soluble de cyclodextrine est de 0,6 g.

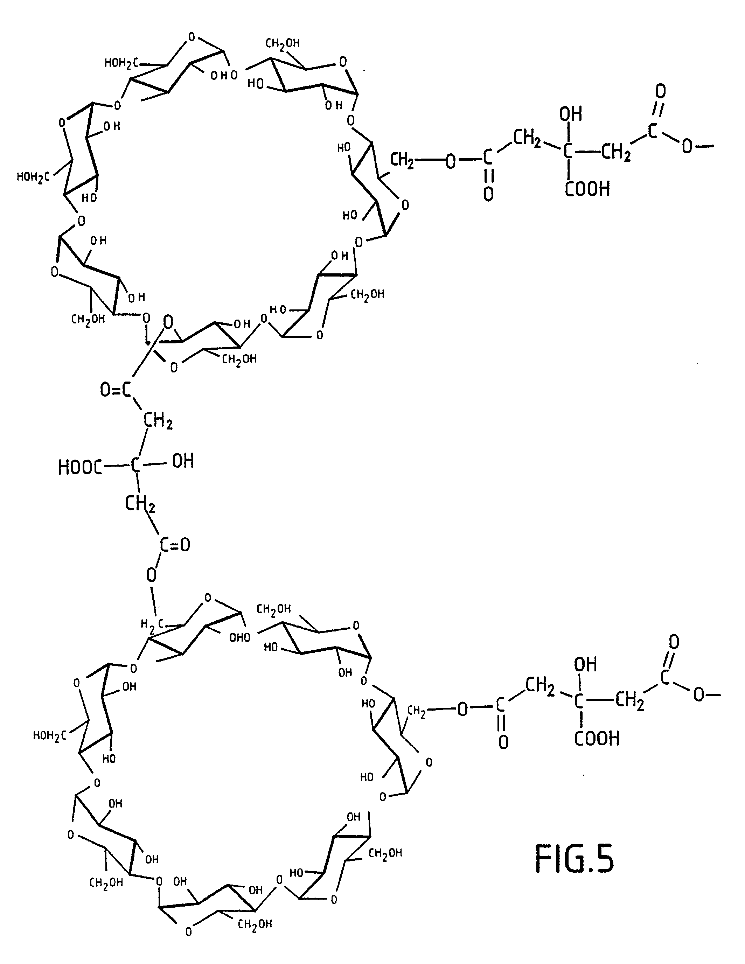

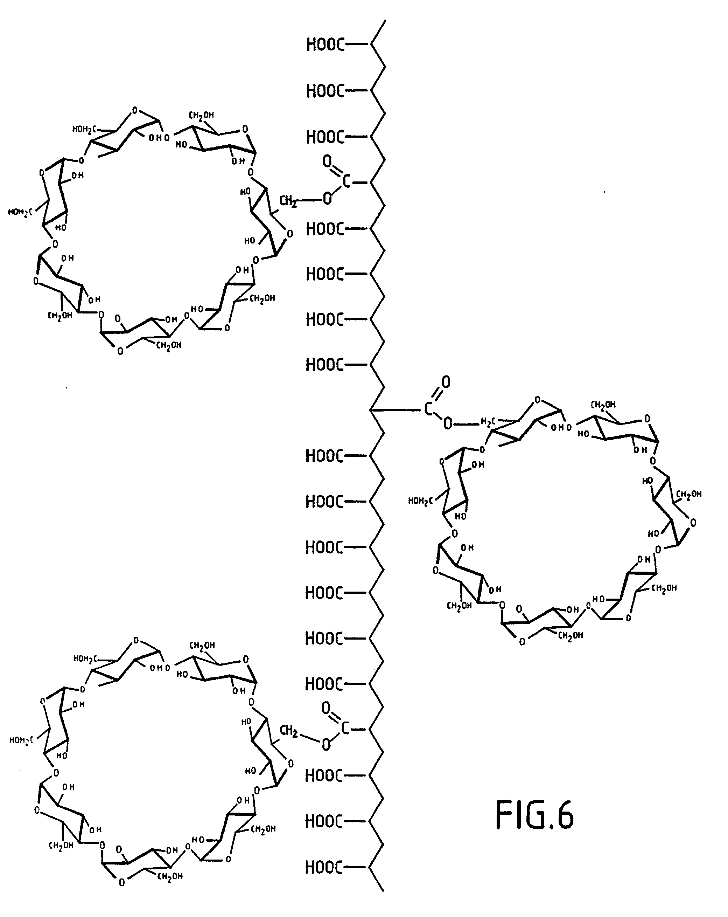

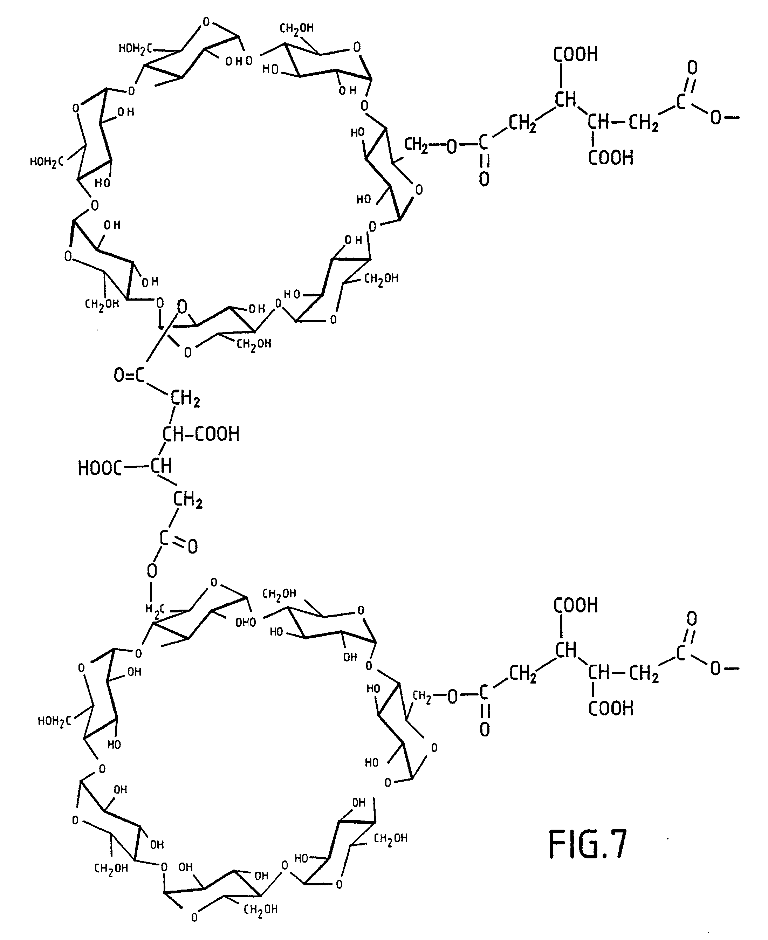

Les figures 5,6 et 7 représentent les formules linéaires simplifiées des copolymères obtenus respectivement à partir des acides citriques, polyacryliques et butanetetracarboxylique.

### Exemple 11

40 mg de copolymère insoluble de cyclodextrine obtenu selon la méthode décrite dans l'exemple 1 ont été placés dans 40 ml de solution contenant 4,00µmol du colorant cationique Cl Basic Red 22. Après 30 min d'agitation 3,92 µmol (98%) de colorant ont été adsorbés par le copolymère. La même expérience a été réalisée avec 40 ml de solution contenant 16,00 µmol du colorant, en présence de 20 mg de copolymère. L'adsorption du colorant après 30 min d'agitation a été de 15,65 µmol (98%).

### Exemple 12

40 mg de copolymère insoluble de cyclodextrine obtenu selon la méthode décrite dans l'exemple 1 ont été placés dans 40 ml de solution contenant 4,00µmol du colorant cationique Cl Basic Green 4 (Vert de Malachite). Après 30 min d'agitation le colorant a été adsorbé par le copolymère à 100%. La même expérience a été réalisée avec 35 ml de solution contenant 14,00 µmol du colorant en présence de 20 mg de copolymère. L'adsorption du colorant après 30 min d'agitation a été de 13,75 µmol (98%).

### Exemple 13

100 mg de copolymère insoluble de cyclodextrine obtenu selon la méthode décrite dans l'exemple 1 ont été placés dans 40 ml de solution contenant 4,00 µmol du colorant direct Cl Direct Red 81. Après 65 heures d'agitation 2,54 µmol (64%) du colorant ont été adsorbés par le copolymère insoluble de cyclodextrine.

### Exemple 14

100 mg de copolymère insoluble de cyclodextrine obtenu selon la méthode décrite dans l'exemple 1 ont été placés dans 40 ml de solution contenant 4,00 µmol du colorant acide Cl Acid Blue 15. Après 65 heures d'agitation 2,06 µmol (52%) du colorant ont été adsorbés par le copolymère insoluble de cyclodextrine.

### Exemple 15

40 mg de copolymère insoluble de cyclodextrine obtenu selon la méthode décrite dans l'exemple 1 ont été placés dans 40 ml de solution contenant 20,00 µmol de 2-naphtol. Après 24 heures d'agitation 5,60 µmol (28%) de 2-naphtol ont été adsorbés par le copolymère insoluble de cyclodextrine.

### Exemple 16

100 mg de copolymère insoluble de cyclodextrine obtenu selon la méthode décrite dans l'exemple 4 ont été placés dans 40 ml de solution contenant 20,00 µmol de benzaldéhyde. Après 65 heures d'agitation 5,94 µmol (30%) du benzaldéhyde ont été adsorbés par le copolymère insoluble de cyclodextrine.

### Exemple 17

100 mg de copolymère insoluble de cyclodextrine obtenu selon la méthode décrite dans l'exemple 5 ont été placés dans 40 ml de solution contenant 20,00 µmol de caféine. Après 65 heures d'agitation 3,92 µmol (20%) de la caféine ont été adsorbés par le copolymère insoluble de cyclodextrine.

### Exemple 18

Trois solutions de 50 ml de colorant cationique Cl Basic Red 22 10⁻⁴ M ont été introduites dans des membranes de dialyse 12000-14000d. La première fraction contenait le colorant seul, la seconde contenait le colorant et 0,2837 g de β cyclodextrine (soit 5X10⁻³ mol/l); la troisième contenait le colorant et 0,2837g de copolymère soluble de cyclodextrine obtenu selon la méthode décrite dans l'exemple 1. Les trois membranes avec les trois différentes solutions de colorant ont été plongées chacune dans 250 ml d'eau distillée. Le suivi de la diffusion du colorant de l'intérieur de la membrane vers l'eau distillée entourant la membrane a été effectué par la détermination de l'absorbance à 540nm de la solution extérieure. Les valeurs d'absorbance obtenues pour les solutions extérieures de trois fractions après 5 heures de dialyse ont été de 0,2722 pour la première fraction, de 0,1873 pour la deuxième fraction et seulement de 0,0237 pour la troisième fraction. Ces résultats confirment une forte complexation du colorant par le copolymère soluble de cyclodextrine en particulier plus forte que pour la cyclodextrine seule.

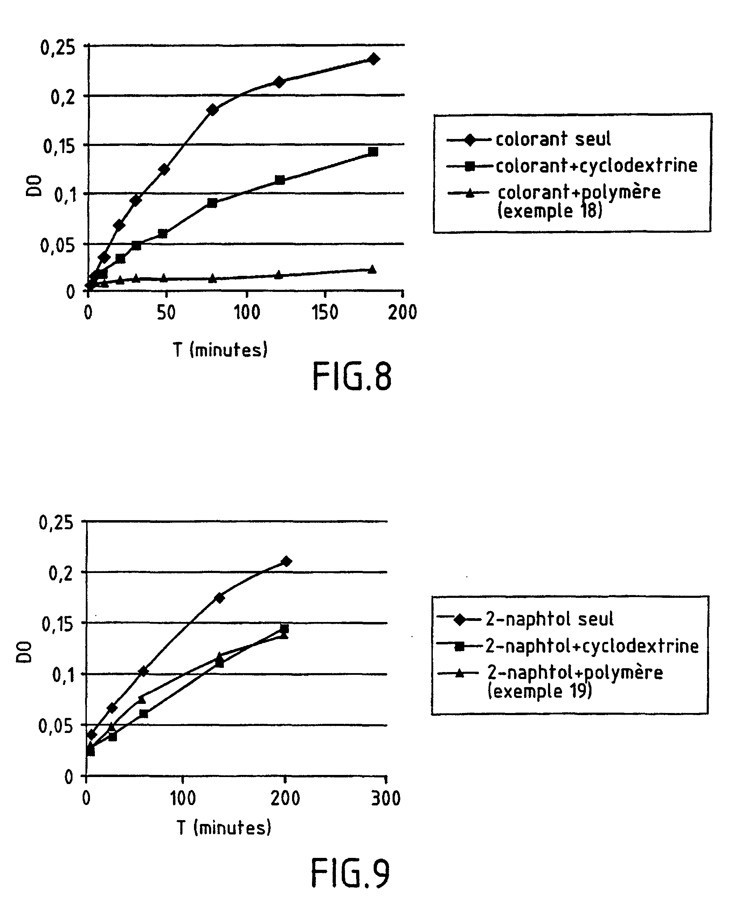

La figure 8 représente la cinétique de diffusion du colorant cationique Cl Basic Red 22 au travers d'une membrane semi-perméable.

### Exemple 19

Trois solutions de 50 ml de 2-naphtol 10⁻³ M ont été introduites dans des membranes de dialyse 12000-14000d. La première fraction contenait le 2-naphtol seul, la seconde contenait le colorant et 0,2837 g de β-cyclodextrine (soit 5X10⁻³ mol/l) ; la troisième contenait le colorant et 0,3317g de copolymère soluble de cyclodextrine obtenu selon la méthode décrite dans l'exemple 1. Les trois membranes avec les trois différentes solutions de colorant ont été plongées dans 250 ml d'eau distillée. Le suivi de la diffusion du colorant de l'intérieur de la membrane vers l'eau distillée entourant la membrane a été effectué par la détermination d'absorbance à 327 nm de la solution extérieure. Les valeurs d'absorbance obtenues pour les solutions extérieures de trois fractions après 76 heures de dialyse ont été de 0,2865 pour la première fraction, de 0,3030 pour la deuxième fraction et de 0,2574 pour la troisième fraction.

La figure 9 représente la cinétique de diffusion du 2-naphtol au travers d'une membrane semi-perméable.

### Exemple 20

Les capacités d'échange ionique des polymères insolubles de cyclodextrine obtenus selon la méthode décrite dans les exemples 1, 6 et 7 ont été déterminés selon une méthode connue. Ces capacités d'échange ionique ont été respectivement de 2,84 mmol/g pour le copolymère basé sur l'acide citrique, de 4,03 mmol/g pour le copolymère basé sur l'acide polyacrylique et de 3,76 mmol/g pour le copolymère basé sur l'acide 1,2,3,4-butanetetracarboxylique.

### Exemple 21

Le procédé a été mis en oeuvre conformément à l'exemple 1 avec une modification de la quantité de l'acide citrique. La concentration de l'acide citrique dans le mélange réactionnel est de 60 g/l. La masse de polymère insoluble de cyclodextrine obtenu est de 1,6 g. Le taux de gonflement de ce copolymère, déterminé selon une méthode connue, est de 11,30.

## Revendications

1. Procédé de fabrication de copolymères insolubles et solubles dans l'eau de cyclodextrine(s) et/ou de dérivé(s) de cyclodextrine(s) **caractérisé par** les opérations suivantes :
- préparation à l'état solide d'un mélange de cyclodextrine(s) et/ou de dérivé(s) de cyclodextrine(s) et/ou de complexe(s) d'inclusion de cyclodextrine(s) et/ou de dérivé(s) de cyclodextrine(s) et d'un acide poly(carboxylique) ou d'un anhydride d'acide poly(carboxylique) ou d'un mélange d'acides poly(carboxyliques) et/ou d'anhydrides d'acides poly(carboxyliques) et, éventuellement, d'un catalyseur ;
- chauffage du mélange solide, à une température comprise entre 100°C et 200°C, pendant une durée comprise entre 1 min et 60 min, de préférence, égale à 30 min.

2. Procédé selon la revendication 1, **caractérisé en ce que**, pour obtenir le mélange à l'état solide, on prépare une solution aqueuse de cyclodextrine(s) et/ou de dérivé(s) de cyclodextrine(s) et/ou de complexe(s) d'inclusion de cyclodextrine et/ou de dérivé(s) de cyclodextrine et d'un acide poly(carboxylique) et/ou d'un anhydride d'acide polycarboxylique et/ou d'un mélange d'acides poly(carboxyliques) et/ou d'anhydrides d'acides poly(carboxyliques) et, éventuellement, d'un catalyseur et **en ce que** l'on évapore l'eau de ladite solution à une température comprise entre 40°C et 100°C, de préférence sous vide à 90°C.

3. Procédé selon l'une des revendications 1 et 2 pour la fabrication de copolymères de cyclodextrine(s) et/ou de dérivé(s) de cyclodextrine(s) et/ou de complexe(s) d'inclusion de cyclodextrine(s) et/ou de dérivé(s) de cyclodextrine(s) insolubles, **caractérisé en ce que** le produit solide obtenu après chauffage est lavé abondamment à l'eau puis séché.

4. Procédé selon la revendication 3, **caractérisé en ce que** le mélange est chauffé à une température égale ou supérieure à 150°C, de préférence sensiblement égale ou égale à 170°C, pendant une durée supérieure ou égale à 30 min et de préférence sous vide, en sorte de produire majoritairement un copolymère insoluble.

5. Procédé selon la revendication 3, **caractérisé en ce que** le mélange est chauffé à une température égale à 180°C, sous vide pendant 30 min.

6. Procédé selon l'une des revendications 1 et 2 pour la fabrication de copolymères de cyclodextrine(s) et/ou de dérivé(s) de cyclodextrine(s) et/ou de complexe(s) d'inclusion de cyclodextrine(s) et/ou de dérivé(s) de cyclodextrine(s) solubles **caractérisé en ce que** :
- le produit solide obtenu après chauffage est lavé à l'eau puis filtré ;
- le copolymère soluble est isolé du filtrat, de préférence, par dialyse et lyophilisation.

7. Procédé selon la revendication 6, **caractérisé en ce que** le mélange est chauffé à une température inférieure ou égale à 140°C, pendant une durée inférieure ou égale à 30 min et de préférence sous vide, en sorte de produire majoritairement un copolymère soluble.

8. Procédé selon la revendication 6, **caractérisé en ce que** le mélange est chauffé à une température égale à 130°C, sous vide, pendant 30 min.

9. Procédé selon l'une quelconque des revendications 1 à 8, **caractérisé en ce que** le catalyseur est choisi parmi les dihydrogénophosphates, les hydrogénophosphates, les phosphates, les hypophosphites, les phosphites de métaux alcalins, les sels de métaux alcalins des acides polyphosphoriques, les carbonates, les bicarbonates, les acétates, les borates, les hydroxydes de métaux alcalins, les amines aliphatiques et l'ammoniaque, et de préférence, parmi l'hydrogénophosphate de sodium, le dihydrogénophosphate de sodium et l'hypophosphite de sodium.

10. Procédé selon l'une quelconque des revendications 1 à 9, **caractérisé en ce que** la cyclodextrine est choisie parmi l'α-cyclodextrine, la β-cyclodextrine et la γ-cyclodextrine et **en ce que** les dérivés de cyclodextrine sont choisis parmi les dérivés hydroxypropyl méthylés ou acétylés de l'α-cyclodextrine, de la β-cyclodextrine et de la γ-cyclodextrine et les complexes d'inclusion desdites cyclodextrines et desdits dérivés de cyclodextrine(s).

11. Procédé selon l'une quelconque des revendications 1 à 10, **caractérisé en ce que** l'acide poly(carboxylique) et l'anhydride d'acide polycarboxylique sont choisis parmi les acides polycarboxyliques et les anhydrides des acides poly(carboxyliques) suivants: les acides poly(carboxyliques) acycliques saturés et insaturés, les acides poly(carboxyliques) cycliques saturés et insaturés, les acides poly(carboxyliques) aromatiques, les acides hydroxypoly(carboxyliques), de préférence, parmi l'acide citrique, l'acide poly(acrylique), l'acide poly(méthacrylique), l'acide 1, 2, 3, 4-butane tétracarboxylique, l'acide maléique, l'acide citraconique, l'acide itaconique, l'acide 1, 2, 3-propane tricarboxylique, l'acide aconitique, l'acide all-cis-1, 2, 3, 4-cyclopentanetétracarboxylique, l'acide méllitique, l'acide oxydisuccinique, l'acide thiodisuccinique.

12. Copolymères de cyclodextrine(s) et/ou de dérivés de cyclodextrine **caractérisés en ce que** leur structure comporte la répétition d'un motif de formule générale : 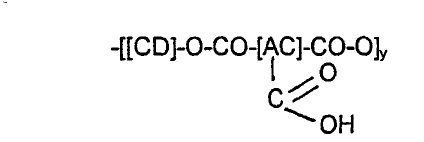 où y est le nombre de répétitions du motif et, dans laquelle
- [CD] représente une molécule d'α-cyclodextrine, de β-cyclodextrine, de γ-cyclodextrine ou d'un dérivé d'α-cyclodextrine, de β-cyclodextrine ou de γ-cyclodextrine, de préférence, un dérivé hydroxypropyl ou méthylé de l'α-cyclodextrine, de la β-cyclodextrine ou de la γ-cyclodextrine ou un complexe d'inclusion desdites cyclodextrines ou desdits dérivés de cyclodextrine; et 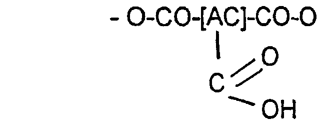 représente la chaîne moléculaire d'un acide (poly)carboxylique dont au moins deux fonctions acide carboxylique sont estérifiées et qui supporte au moins une fonction acide carboxylique non estérifiée.

13. Copolymères selon l'une des revendications 12 et 13, **caractérisé en ce que** l'acide poly(carboxylique) est choisi parmi les acides poly(carboxyliques) acycliques saturés ou insaturés, les acides poly(carboxyliques) cycliques saturés et insaturés, les acides poly(carboxyliques) aromatiques, les acides hydroxypoly(carboxyliques), de préférence, parmi l'acide citrique, l'acide poly(acrylique), l'acide poly(méthacrylique), l'acide 1, 2, 3, 4-butanetétracarboxylique, l'acide 1, 2, 3-propane tricarboxylique, l'acide aconitique, l'acide all-cis-1, 2, 3, 4-cyclopentanetétracarboxylique, l'acide méllitique, l'acide oxydisuccinique, l'acide thiodisuccinique.

## Patentansprüche

1. Verfahren zur Herstellung von in Wasser unlöslichen und löslichen Copolymeren von Cyclodextrin(en) und/oder Cyclodextrin-Derivat(en), **dadurch gekennzeichnet, dass** man die folgenden Operationen durchführt:
- Herstellung einer Feststoff-Mischung von Cyclodextrin(en) und/oder Cyclodextrin-Derivat(en) und/oder Einschlusskomplex(en) von Cyclodextrin(en) und/oder Cyclodextrin-Derivat(en) und einer Polycarbonsäure oder eines Polycarbonsäureanhydrids oder einer Mischung von Polycarbonsäuren und/oder Polycarbonsäureanhydriden und gegebenenfalls eines Katalysators; und
- Erwärmung der Feststoff-Mischung auf eine Temperatur zwischen 100 und 200 °C für eine Zeitdauer zwischen 1 min und 60 min, vorzugsweise für 30 min.

2. Verfahren nach Anspruch 1, **dadurch gekennzeichnet, dass** man zur Herstellung der Feststoff-Mischung eine wässrige Lösung von Cyclodextrin(en) und/oder Cyclodextrin-Derivat(en) und/oder Einschlusskomplex(en) von Cyclodextrin(en) und/oder Cyclodextrin-Derivat(en) und einer Polycarbonsäure und/oder eines Polycarbonsäureanhydrids und/oder einer Mischung von Polycarbonsäuren und/oder Polycarbonsäureanhydriden und gegebenenfalls eines Katalysators herstellt und dass man das Wasser der genannten Lösung bei einer Temperatur zwischen 40 und 100 °C, vorzugsweise unter Vakuum bei 90 °C, verdampft.

3. Verfahren nach einem der Ansprüche 1 und 2 zur Herstellung von unlöslichen Copolymeren von Cyclodextrin(en) und/oder Cyclodextrin-Derivat(en) und/oder Einschlusskomplex(en) von Cyclodextrin(en) und/oder Cyclodextrin-Derivat(en), **dadurch gekennzeichnet, dass** das erhaltene feste Produkt nach dem Erwärmen mit Wasser gründlich gewaschen und dann getrocknet wird.

4. Verfahren nach Anspruch 3, **dadurch gekennzeichnet, dass** die Mischung auf eine Temperatur von ≥ 150 °C, vorzugsweise von im wesentlichen 170 °C oder von 170 °C für eine Zeitspanne von ≥ 30 min und vorzugsweise unter Vakuum so erhitzt wird, dass überwiegend ein unlösliches Copolymer gebildet wird.

5. Verfahren nach Anspruch 3, **dadurch gekennzeichnet, dass** die Mischung unter Vakuum 30 min lang auf eine Temperatur von 180 °C erhitzt wird.

6. Verfahren nach einem der Ansprüche 1 und 2 zur Herstellung von löslichen Copolymeren von Cyclodextrin(en) und/oder Cyclodextrin-Derivat(en) und/oder Einschlusskomplex(en) von Cyclodextrin(en) und/oder Cyclodextrin-Derivat(en), **dadurch gekennzeichnet, dass**
- das nach dem Erwärmen erhaltene feste Produkt mit Wasser gewaschen und dann filtriert wird; und
- das lösliche Copolymer aus dem Filtrat isoliert wird, vorzugsweise durch Dialyse und Lyophilisierung.

7. Verfahren nach Anspruch 6, **dadurch gekennzeichnet, dass** die Mischung für eine Zeitspanne von ≤ 30 min und vorzugsweise unter Vakuum in der Weise auf eine Temperatur von ≤ 140 °C erhitzt wird, dass überwiegend ein lösliches Copolymer gebildet wird.

8. Verfahren nach Anspruch 6, **dadurch gekennzeichnet, dass** die Mischung 30 min lang unter Vakuum auf eine Temperatur von 130 °C erhitzt wird.

9. Verfahren nach irgendeinem der Ansprüche 1 bis 8, **dadurch gekennzeichnet, dass** der Katalysator ausgewählt wird aus den Dihydrogenphosphaten, Hydrogenphosphaten, Phosphaten, Hypophosphiten und Phosphiten von Alkalimetallen, den Alkalimetallsalzen von Polyphosphorsäuren, den Carbonaten, Bicarbonaten, Acetaten, Boraten und Hydroxiden von Alkalimetallen, den aliphatischen Aminen und Ammoniak und vorzugsweise aus der Gruppe Natriumhydrogenphosphat, Natriumdihydrogenphosphat und Natriumhypophosphit.

10. Verfahren nach einem der Ansprüche 1 bis 9, **dadurch gekennzeichnet, dass** das Cyclodextrin ausgewählt wird aus α-Cyclodextrin, β-Cyclodextrin und γ-Cyclodextrin und dass die Cyclodextrin-Derivate ausgewählt werden aus den Hydroxypropyl- oder Acetyl-Derivaten von α-Cyclodextrin, β-Cyclodextrin und γ-Cyclodextrin und den Einschlusskomplexen der genannten Cyclodextrine und der genannten Cyclodextrin-Derivate.

11. Verfahren nach einem der Ansprüche 1 bis 10, **dadurch gekennzeichnet, dass** die Polycarbonsäure und das Polycarbonsäureanhydrid ausgewählt werden aus den folgenden Polycarbonsäuren und Polycarbonsäureanhydriden: gesättigten und ungesättigten acyclischen Polycarbonsäuren, gesättigten und ungesättigten cyclischen Polycarbonsäuren, aromatischen Polycarbonsäuren, Hydroxypolycarbonsäuren, vorzugsweise aus der Gruppe Citronensäure, Polyacrylsäure, Polymethacrylsäure, 1,2,3,4-Butan-tetracarbonsäure, Maleinsäure, Citraconsäure, Itaconsäure, 1,2,3-Propan-tricarbonsäure, Aconitsäure, allcis-1,2,3,4-Cyclopentantetracarbonsäure, Mellithsäure, Oxydibernsteinsäure und Thiodibernsteinsäure.

12. Copolymere von Cyclodextrin(en) und/oder Cyclodextrin-Derivat(en), **dadurch gekennzeichnet, dass** ihre Struktur eine wiederkehrende Einheit der allgemeinen Formel aufweist: 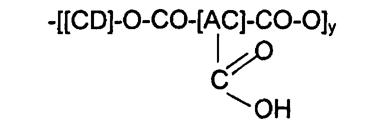 worin:
- y steht für die Anzahl der Wiederholungen der Einheit,
- [CD] steht für ein Molekül von α-Cyclodextrin, β-Cyclodextrin, γ-Cyclodextrin oder eines Derivats von α-Cyclodextrin, β-Cyclodextrin oder γ-Cyclodextrin, vorzugsweise eines Hydroxypropyl- oder Methyl-Derivats von α-Cyclodextrin, β-Cyclodextrin oder γ-Cyclodextrin oder einen Einschlusskomplex der genannten Cyclodextrine oder der genannten Cyclodextrin-Derivate; und
- 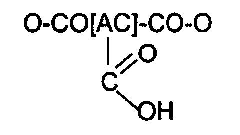 steht für die Molekülkette einer Polycarbonsäure, bei der mindestens zwei Carbonsäure-Funktionen verestert sind und die mindestens eine nicht veresterte Carbonsäurefunktion trägt.

13. Copolymere nach Anspruch 12, **dadurch gekennzeichnet, dass** die Polycarbonsäure ausgewählt ist aus den gesättigten oder ungesättigten acyclischen Polycarbonsäuren, den gesättigten und ungesättigten cyclischen Polycarbonsäuren, den aromatischen Polycarbonsäuren, den Hydroxypolycarbonsäuren, vorzugsweise aus der Gruppe Citronensäure, Polyacrylsäure, Polymethacrylsäure, 1,2,3,4-Butantetracarbonsäure, 1,2,3-Propantricarbonsäure, Aconitsäure, all-cis-1,2,3,4-Cyclopentantetracarbonsäure, Mellithsäure, Oxydibernsteinsäure und Thiodibernsteinsäure.

## Claims

1. A process for producing water-soluble and water-insoluble copolymers of cyclodextrin(s) and/or cyclodextrin derivative(s), **characterised by** the following operations:
- preparing a solid state mixture of cyclodextrin(s) and/or cyclodextrin derivatives) and/or inclusion complex(es) of cyclodextrin(s) and/or cyclodextrin derivative(s) and a poly(carboxylic) acid or a poly(carboxylic) acid anhydride or a mixture of poly(carboxylic) acid(s) and/or poly(carboxylic) acid anhydride(s), and optionally, a catalyst;
- heating the solid mixture to a temperature in the range 100°C to 200°C for a period in the range 1 min to 60 min, preferably equal to 30 min.

2. A process according to claim 1, **characterised in that**, in order to obtain the solid state mixture, an aqueous solution of cyclodextrin(s) and/or cyclodextrin derivative(s) and/or inclusion complex(es) of cyclodextrin and/or cyclodextrin derivative(s) and a poly(carboxylic) acid and/or a poly(carboxylic) acid anhydride and/or a mixture of poly(carboxylic) acids and/or poly(carboxylic) acid anhydride(s) and an optional catalyst is prepared, and **in that** the water is evaporated from said solution at a temperature in the range 40°C to 100°C, preferably in vacuo at 90°C.

3. A process according to claim 1 or claim 2, for the production of copolymers of cyclodextrin(s) and/or cyclodextrin derivative(s) and/or insoluble inclusion complex(es) of cyclodextrin(s) and/or insoluble cyclodextrin derivative(s), **characterised in that** the solid product obtained after heating is washed with copious quantities of water, then dried.

4. A process according to claim 3, **characterised in that** the mixture is heated to a temperature of 150°C or more, preferably 170°C or substantially 170°C, for a period of 30 minutes or more, preferably in vacuo, to produce mainly an insoluble copolymer.

5. A process according to claim 3, **characterised in that** the mixture is heated to a temperature equal to 180°C, in vacuo, for 30 minutes.

6. A process according to claim 1 or claim 2 for the production of soluble copolymers of cyclodextrin(s) and/or cyclodextrin derivative(s) and/or inclusion complex(es) of cyclodextrin(s) and/or cyclodextrin derivative(s), **characterised in that**:
- the solid product obtained after heating is washed with water then filtered;
- the soluble copolymer is isolated from the filtrate, preferably by dialysis and freeze drying.

7. A process according to claim 6, **characterised in that** the mixture is heated to a temperature of 140°C or less, for a period of 30 minutes or less, preferably in vacuo, to produce mainly a soluble copolymer.

8. A process according to claim 6, **characterised in that** the mixture is heated to a temperature equal to 130°C, in vacuo, for 30 minutes.

9. A process according to any one of claims 1 to 8, **characterised in that** the catalyst is selected from dihydrogen phosphates, hydrogen phosphates, phosphates, hypophosphites, alkali metal phosphites, alkali metals salts of polyphosphoric acids, carbonates, bicarbonates, acetates, borates, alkali metal hydroxides, aliphatic amines and ammonia, preferably selected from sodium hydrogen phosphate, sodium dihydrogen phosphate and sodium hypophosphite.

10. A process according to any one of claims 1 to 9, **characterised in that** the cyclodextrin is selected from α-cyclodextrin, β-cyclodextrin and γ-cyclodextrin and **in that** the cyclodextrin derivatives are selected from hydroxypropyl, methyl or acetyl derivatives of α-cyclodextrin, β-cyclodextrin and γ-cyclodextrin and inclusion complexes formed from said cyclodextrins and said cyclodextrin derivatives.

11. A process according to any one of claims 1 to 10, **characterised in that** the poly(carboxylic) acid and poly(carboxylic) acid anhydride are selected from the following poly(carboxylic) acids and poly(carboxylic) acid anhydrides: saturated and unsaturated acyclic poly(carboxylic) acids, saturated and unsaturated cyclic poly(carboxylic) acids, aromatic poly(carboxylic) acids, hydroxypoly(carboxylic) acids, preferably selected from citric acid, poly(acrylic) acid, poly(methacrylic) acid, 1,2,3,4-butanetetracarboxylic acid, maleic acid, citraconic acid, itaconic acid, 1,2,3-propane-tricarboxylic acid, aconitic acid, all-cis-1,2,3,4-cyclopentanetetracarboxylic acid, mellitic acid, oxydisuccinic acid, and thiodisuccinic acid.

12. Copolymers of cyclodextrin(s) and/or cyclodextrin derivative(s), **characterised in that** the repeating unit of the structure has the following general formula: 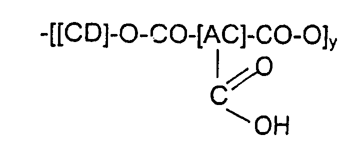 in which y is the number of repetitions of the unit; and in which:
- [CD] represents an α-cyclodextrin, β-cyclodextrin or γ-cyclodextrin molecule or an α-cyclodextrin, β-cyclodextrin or γ-cyclodextrin derivative, preferably a hydroxypropyl or methyl α-cyclodextrin, β-cyclodextrin and γ-cyclodextrin derivative or an inclusion complex of said cyclodextrins or said cyclodextrin derivatives; and
- 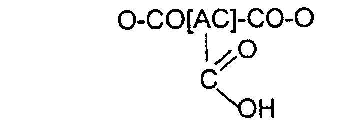 represents the molecular chain of a poly(carboxylic) acid in which at least two carboxylic acid functions have been esterified, and which supports at least one non esterified carboxylic acid function.

13. Copolymers according to claim 12 or claim 13, **characterised in that** the poly(carboxylic) acid is selected from saturated or unsaturated acyclic poly(carboxylic) acids, saturated and unsaturated cyclic poly(carboxylic) acids, aromatic poly(carboxylic) acids, hydroxypoly(carboxylic) acids, preferably selected from citric acid, poly(acrylic) acid, poly(methacrylic) acid, 1,2,3,4-butanetetracarboxylic acid, 1,2,3-propane-tricarboxylic acid, aconitic acid, all-cis-1,2,3,4-cyclopentanetetracarboxylic acid, mellitic acid, oxydisuccinic acid, and thiodisuccinic acid.
